# EUROPEAN PATENT APPLICATION

(11) **EP 3 859 220 A1**
(43) Date of publication of application: **04.08.2021**
(21) Application number: 19866245.4
(22) Date of filing: 19.09.2019
(51) Int. Cl.: F24F 11/52, F24F 11/523, F24F 11/56

(54) **HEAT SOURCE SYSTEM MANAGEMENT APPARATUS, MANAGEMENT SYSTEM, AND METHOD FOR DISPLAYING HEAT SOURCE SYSTEM MANAGEMENT INFORMATION**

(30) Priority: 26.09.2018 JP 2018180166
(71) Applicant: Toshiba Carrier Corporation, Kawasaki-Shi, Kanagawa 212-8585 (JP)
(72) Inventor: OKAZAKI Noriomi, Fuji-shi, Shizuoka 416-8521 (JP); MURATA Nozomu, Tokyo 105-8001 (JP)
(74) Representative: Gramm, Lins & Partner Patent- und Rechtsanwälte PartGmbB
(86) International application number: PCT/JP2019/036665
(87) International publication number: WO 2020/066809

(57) **Abstract**

A manager of a heat source system of an air conditioner according to an embodiment displays a state of the heat source system provided with a plurality of heat source equipment groups including a plurality of heat source equipments and a repeater to which the plurality of heat source equipments are connected as one unit. The manager includes an equipment information acquisition unit for acquiring operation state information of the heat source equipments from the repeaters of each of the heat source equipment groups, a display information generation unit for arranging information indicating the operation state information of the heat source equipment acquired by the equipment information acquisition unit for each of the repeaters at a corresponding position in a configuration diagram of a water distributing pipe constructed in the heat source system and generating display information on a management screen relating to the heat source equipment in the heat source system, and a display unit for displaying the display information generated by the display information generation unit.

## Description

### TECHNICAL FIELD

An embodiment of the present invention relates to a heat source system manager, a management system, and a display method of the heat source system management information.

### BACKGROUND

Conventionally, in a heat source system of a large-scale industrial facility such as a factory or a warehouse, a plurality of heat sources such as electric power, gas and a heat pump are used, and a large number of heat source equipments are used for each heat source. Operation state information of the heat source equipment is acquired by a remote manager, and is displayed on a monitor to be provided to a management parson of the heat source system.

### CITATION LIST

### Patent Literature

[PTL 1] JP 2017-101881 A

### SUMMARY

Since the heat source equipment used in the large-scale industrial facility as described above is enormous in number and uses a plurality of heat sources, the system configuration in the facility is complicated. For example, a plurality of heat source systems are constructed for each building or facility in an industrial facility, a plurality of heat sources are utilized in each heat source system, and a plurality of corresponding heat source equipments are connected under a plurality of repeaters installed for each heat source to constitute a system in the facility.

When operating state information of a system having such a huge number of heat source equipments is displayed on a remote manager, information of all the heat source equipments cannot be displayed at once because the display space of the manager is limited.

Therefore, in order to display information of desired heat source equipments, the information in the hierarchically constructed system must be designated a plurality of times, for example, a desired system must be designated on a screen displaying the names of all the systems in the facility, a desired type of heat source must be designated on a screen displaying the types of heat sources in the designated system, and a desired repeater must be designated on a screen displaying the repeaters installed with respect to the designated heat source, thereby complicating the operation. Further, when the information of each layer is sequentially displayed in this manner, there is a problem that it is difficult to grasp the overall configuration of the system.

It is an object of the present invention to provide a heat source system manager, a management system, and a display method of heat source system management information, for displaying operation state information of a large number of heat source equipments relating to a plurality of heat sources in a state easily grasped by a manager.

In order to achieve the above object, a manager according to an embodiment is configured to display a state of a heat source system comprising a plurality of heat source equipment groups each comprising, as one unit, a plurality of heat source equipments connected to a load device by one same water distributing pipe, configured to capture water subjected to heat exchange treatment by the load device, and generating hot or cold water for supplying to the load device again, and a repeater to which the plurality of heat source equipments are connected The manager includes: an equipment information acquisition unit configured to acquire operation state information of each of the heat source equipments from the repeater of each of the plurality of heat source equipment groups; a display information generation unit configured to generate display information of a management screen relating to the heat source equipments in the heat source system by arranging information indicating the operation state information of the heat source equipments acquired by the equipment information acquisition unit for each applicable repeater at a corresponding position in a configuration diagram of the water distributing pipe constructed in the heat source system for each of the heat source equipment groups; and a display unit configured to display the display information generated by the display information generation unit.

### BRIEF DESCRIPTION OF THE DRAWING

FIG. 1 is a schematic diagram illustrating a configuration of an industrial facility management system using a manager according to an embodiment.
FIG. 2 is a schematic diagram illustrating a configuration of a heat source equipment within the industrial facility management system using the manager according to the embodiment.
FIG. 3 is a block diagram illustrating a configuration of the manager according to the embodiment.
FIG. 4 is a screen configuration diagram illustrating an example of a management screen displayed on the manager according to the embodiment.
FIG. 5 is a screen configuration diagram illustrating an example of a portion of the management screen displayed on the manager according to the embodiment, which illustrates the number of heat source equipments in each operating state.
FIG. 6 is a screen configuration diagram illustrating an example of the management screen of a system including a group of heat source equipment which is stopped in the management screen displayed in the manager according to the embodiment.
FIG. 7 is a screen configuration diagram illustrating an example of a portion illustrating an operating state of each heat source equipment in the management screen displayed on the manager according to the embodiment.
FIG. 8 is a screen configuration diagram illustrating an example of a portion illustrating a ratio of heat source equipments in operation in the management screen displayed on the manager according to the embodiment.
FIG. 9 is a screen configuration diagram illustrating an example of information displayed when a desired repeater is designated on the management screen displayed on the manager according to the embodiment.
FIG. 10 is a screen configuration diagram illustrating another example of the management screen displayed on the manager according to the embodiment.

### DETAILED DESCRIPTION

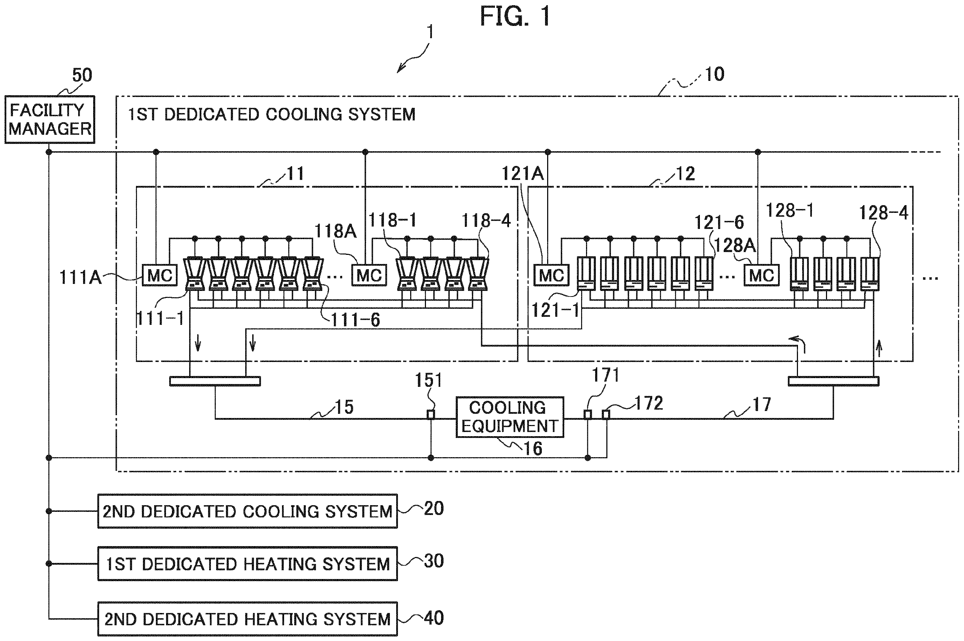

A configuration of an industrial facility management system 1 using a heat source system using water (include brine and the like) as a heat transfer medium according to an embodiment will be described with reference to FIG. 1. The industrial facility management system 1 according to the embodiment includes: a first dedicated cooling system 10, a second dedicated cooling system 20, a first dedicated heating system 30, and a second dedicated heating system 40, which are constructed in a large-scale industrial facility and provided for each building or each load facility; and a facility manager (group controller) 50 connected to these system 10 to 40.

The first dedicated cooling system 10 includes four heat source equipment groups 11 to 14 for each of a plurality of heat source types including a first heat source (electric power) equipment group 11 composed of a plurality of heat source equipments using electric power and a second heat source (gas) equipment group 12 composed of a plurality of heat source equipments using gas. The first heat source equipment group 11 is provided with a plurality of repeaters (module controllers: MC), and the heat source equipment corresponding to the first heat source equipment group 11 is connected to a facility manager 50 by relaying any MC.

Specifically, in the first heat source equipment group 11, eight number of MCs 111A to 118A are provided. The MC 111A is connected to six number of heat source equipments 111-1 to 111-6. The MC 112A is connected to six number of heat source equipments 112-1 to 112-6. The MC 113A is connected to six number of heat source equipments 113-1 to 113-6. The MC 114A is connected to six number of heat source equipments 114-1 to 114-6. The MC 115A is connected to six number of heat source equipments 115-1 to 115-6. The MC 116A is connected to six number of heat source equipments 116-1 to 116-6. The MC 117A is connected to four number of heat source equipments 117-1 to 117-4. The MC 118A is connected to four number of heat source equipments 118-1 to 118-4.

In the second heat source equipment group 12, eight number of MCs 121A to 128A are provided. The MC 121A is connected to six number of heat source equipments 121-1 to 121-6. The MC 122A is connected to six number of heat source equipments 122-1 to 122-6. The MC 123A is connected to six number of heat source equipments 123-1 to 123-6. The MC 124A is connected to six number of heat source equipments 124-1 to 124-6. The MC 125A is connected to six number of heat source equipments 125-1 to 125-6. The MC 126A is connected to six number of heat source equipments 126-1 to 126-6. The MC 127A is connected to four number of heat source equipments 127-1 to 127-4. The MC 128A is connected to four number of heat source equipments 128-1 to 128-4.

Similarly, to the third heat source equipment group 13 and the fourth heat source equipment group 14, a plurality of heat source equipments utilizing energy corresponding to each of them are connected via MC. Each MC is connected to the facility manager 50. The first heat source equipment group 11 to the fourth heat source equipment group 14 construct a heat source system used for the first dedicated cooling system 10. That is, each heat source equipment group is constituted as one unit by a plurality of heat source equipments and MC to which the plurality of heat source equipments are connected.

Each of the heat source equipments of the first heat source equipment group 11 to the fourth heat source equipment group 14 is connected by one same first water distributing pipe 15 to a cooling equipment 16 which is a load device to be managed by the first dedicated cooling system 10.

Each heat source equipment in the first dedicated cooling system 10 generates cold water of a preset temperature (e. g. about 7 °C) by heat exchange by a refrigeration cycle using electric power, and supplies the cold water from the first water distributing pipe 15 to the cooling equipment 16. The cold water supplied to the cooling equipment 16 is used for heat exchange, and the water whose temperature has risen to about 12 °C is discharged from the cooling equipment 16, and is taken in again from the second water distributing pipe 17 to the heat source equipment in the first dedicated cooling system 10. As described above, in the first dedicated cooling system 10, cold water for supplying to the cooling equipment 16 again is generated from the taken water.

In the first water distributing pipe 15, an outward water temperature sensor 151 for measuring the temperature of outward water supplied from the heat source equipment to the cooling equipment 16 is installed. The second water distributing pipe 17 is provided with a return water temperature sensor 171 for measuring the temperature of return water returning from the cooling equipment 16 to the heat source equipment, and a return water flow meter 172 for measuring the flow rate of return water. The water temperature measurement value of the outward water measured by the outward water temperature sensor 151, the water temperature measurement value of the return water measured by the return water temperature sensor 171, and the flow rate measurement value of the returning water measured by the return water flow meter 172 are transmitted to the facility manager 50.

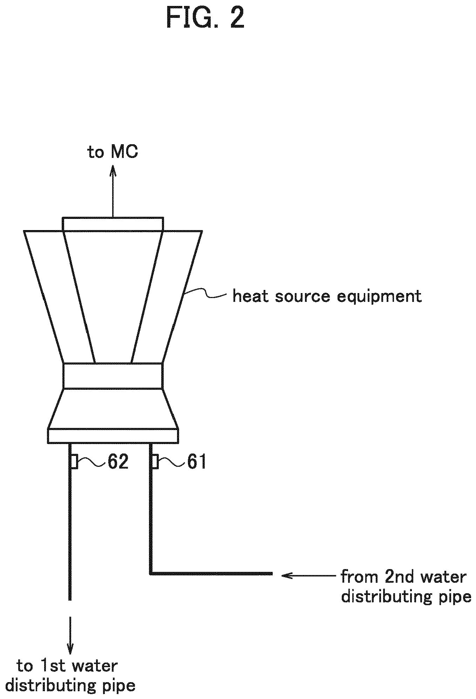

As illustrated in FIG. 2, each of the heat source equipments in the first dedicated cooling system 10 is provided with an inlet temperature sensor 61 for measuring the temperature of the return water taken in from the second water distributing pipe 17 and an outlet temperature sensor 62 for measuring the temperature of the cold water discharged to the first water distributing pipe 15. Each heat source equipment has a built-in or external pump as a flow regulator for regulating the flow rate of incoming return water. Operation and stop status information of each heat source equipment, the water temperature measurement value at the inlet of the heat source equipment measured by the inlet temperature sensor 61, the water temperature measurement value at the outlet of the heat source equipment measured by the outlet temperature sensor 62, the flow rate of return water flowing into each heat source equipment regulated by a pump provided in each heat source equipment, and the heat quantity consumed by each heat source equipment are transmitted to the facility manager 50 via the MC to which each heat source equipment is connected. Each of the heat source equipments may be provided with a valve or the like capable of adjusting the flow rate of return water in addition to a pump as a flow regulator, and in this case, the flow rate of return water flowing into the heat source equipment can be calculated from values such as the valve opening and the pressure.

Similarly, each of the second dedicated cooling system 20, the first dedicated heating system 30, and the second dedicated heating system 40 has a plurality of heat source equipment groups composed of a plurality of heat source equipment and MC, cold or hot water is generated by these heat source equipment, and cold or hot water is supplied to load device in each system.

The number of heat source equipment groups in each equipment system, the number of MCs in each heat source equipment group, and the number of heat source equipment connected to each MC can be appropriately changed according to the temperature and water quantity of cold or hot water required by the load device to be treated.

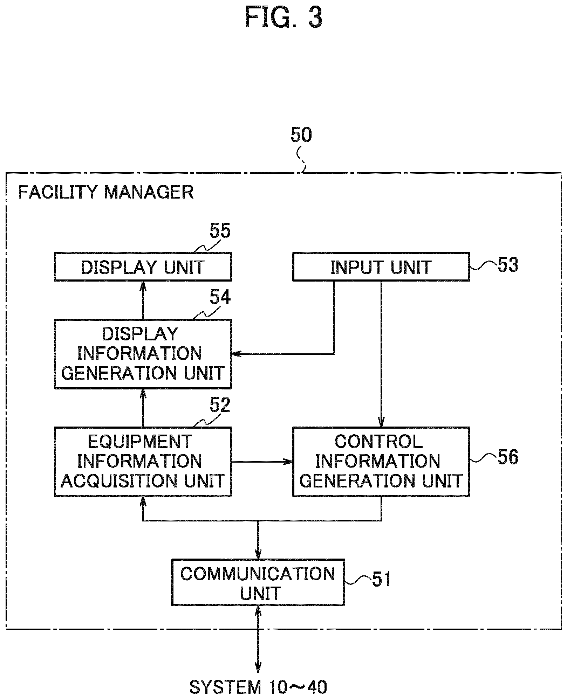

The facility manager 50 is a group controller for managing facility equipment in the industrial facility management system 1, and, as illustrated in FIG. 3, includes a communication unit 51, an equipment information acquisition unit 52, an input unit 53, a display information generation unit 54, a display unit 55, and a control information generation unit 56.

The communication unit 51 communicates with the first dedicated cooling system 10, the second dedicated cooling system 20, the first dedicated heating system 30, and the second dedicated heating system 40. The equipment information acquisition unit 52 acquires, via the communication unit 51, the operation state information of each heat source equipment transmitted from each MC of the systems 10 to 40 and the information transmitted from the outward water temperature sensor 151, the return water temperature sensor 171, and the return water flow meter 172.

The input unit 53 inputs operation information by a management parson of the industrial facility management system 1. In accordance with an instruction inputted from the input unit 53, the display information generation unit 54 generates display information of a management screen relating to the heat source equipment and the MC in the industrial facility management system 1 by using the information acquired by the equipment information acquisition unit 52. The display unit 55 displays the display information generated by the display information generation unit 54.

The control information generating unit 56 generates control information for controlling which heat source equipment group is preferentially operated according to an instruction inputted from the input unit 53, the operating state of the load device, etc., and control information for switching the operation and the stop of each MC and each heat source equipment, and transmits the control information from the communication unit 51 to the corresponding facility.

In the industrial facility management system 1 configured as described above, when the management parson operates the facility manager 50 to display the management screen relating to the heat source equipment in the industrial facility management system 1, the operation information is input from the input unit 53. When the operation information for displaying the management screen is inputted, the display information of the management screen using the information acquired by the device information acquisition unit 52 is generated in the display information generation unit 54 and displayed on the display unit 55.

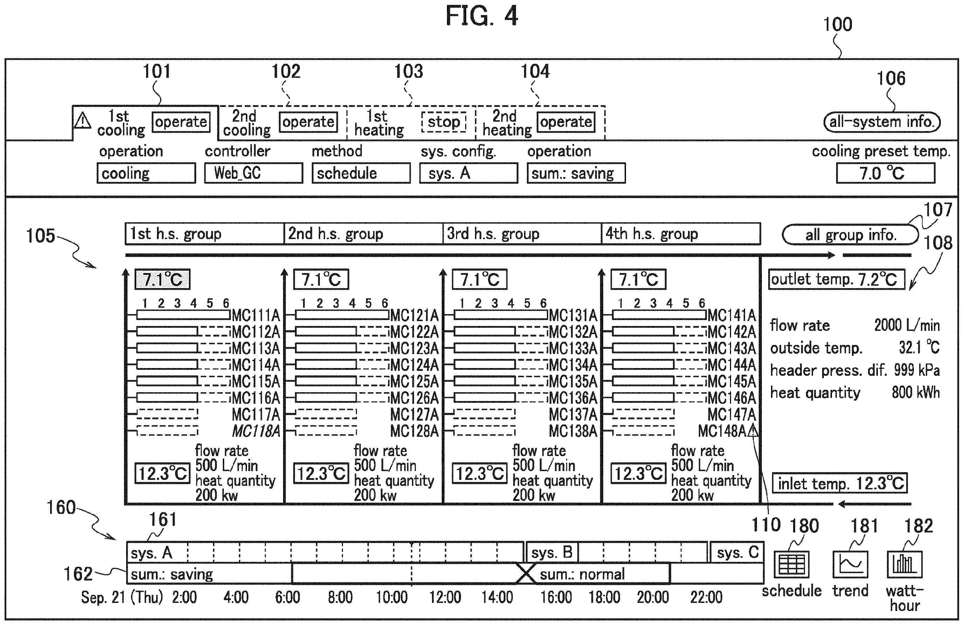

An example of the management screen 100 displayed on the display unit 55 is illustrated in FIG. 4. The management screen 100 is provided with a first tab 101 for designating the first dedicated cooling system 10 as a display object, a second tab 102 for designating the second dedicated cooling system 20, a third tab 103 for designating the first dedicated heating system 30, and a fourth tab 104 for designating the second dedicated heating system 40. On each tab 101 to 104, a mark "operating" indicating that the corresponding system is in operating or a mark "stopped" indicating that the systems 10 to 40 is stopped is displayed. If a fault has occurred in the system, a mark "fault" is displayed on the corresponding tab, for example, the first tab 101. In addition to the fault indication, when any of the heat source equipments in the system detects an abnormal condition, an icon indicating an abnormal alarm or the like is displayed on the corresponding tab. In FIG. 4, the first tab 101 is operated, and the first dedicated cooling system 10 in operation is designated as a display object.

In an equipment status display area 105 at the lower part of the first tab 101, a schematic diagram of the configurations of the first water distributing pipe 15 and the second distributing pipe 17 constructed in the first dedicated cooling system 10 is displayed, the flow direction of water is indicated by arrows, and information of each heat source equipment group 11 to 14 connected to the first water distributing pipe 15 and the second distributing pipe 17 is displayed at a corresponding position in the schematic diagram. At this time, the information of each heat source equipment group 11 to 14 is displayed in the order of priority of operation from the left, for example, the information of the first heat source equipment group 11, the information of the second heat source equipment group 12, the information of the third heat source equipment group 13, and the information of the fourth heat source equipment group 14.

Below the equipment status display area 105, a simple schedule display area 160 is provided for indicating a simple operation schedule. Above the simple schedule display area 160, a system configuration display area 161 for displaying a configuration pattern of the registered heat source equipment group is displayed. Below the simple schedule display area 160, an operation pattern display area 162 for displaying an operation pattern such as a normal operation mode or an energy saving operation mode is displayed.

By displaying the simple schedule display area 160 below the equipment status display area 105, the current operation status, the equipment configuration, and the operation schedule can be viewed on the same screen, and the equipments can be easily managed.

On the right side of the simple schedule display area 160, icons for opening other screens such as a schedule button 180 for opening a detailed schedule display screen, a trend button 181 for opening a screen for displaying past trends, and a watt-hour button 182 for opening a past power consumption amount display screen are displayed. This facilitates access to other screens for displaying missing information in the state of the management screen 100.

As the information of the first heat source equipment group 11, for each of the MC 111A to MC 118A, text information indicating the identification information of the MC, solid line rectangle information having a length corresponding to the number of the connected heat source equipments in operating, and dotted line rectangle information having a length corresponding to the number of the connected heat source equipments in stopped are displayed. For example, with respect to the MC 111A, since all of the connected six number of heat source equipments 111-1 to 111-6 are in operating, rectangular information having the length of six is displayed. With respect to the MC 112A, since of the six number of heat source equipments 112-1 to 112-6 connected, four number of heat source equipments are operating and two number of heat source equipments are stopped, solid line rectangle information having the length of four and dotted line rectangle information having the length of two are displayed.

Here, with respect to the stopped MC, for example, MC 118A, identification information of the MC is indicated by text information of low brightness, and dotted rectangular information indicating that all connected four number of heat source equipments are stopped is displayed. In FIG. 4, text information of low brightness illustrating identification information of the MC 118A is illustrated by text information in italics.

Although the heat source equipment group connected to one repeater MC is illustrated as a set of horizontally long rectangular information, the heat source equipment group may be divided into a plurality of rectangular information items and displayed. For example, when one repeater MC 111A is connected to twelve number of heat source equipments, the information may be displayed as rectangle information of upper and lower two stages.

Similarly, with respect to the second heat source equipment group 12, the third heat source equipment group 13, and the fourth heat source equipment group 14, information indicating the number of connected heat source equipment is displayed separately for each MC, whether it is in operating or stopped.

Although the case has been described in which the number of equipments in operating is indicated by solid line rectangle information and the number of equipments in stopped is indicated by dotted line rectangle information, another display method may be used if the number of equipments in operating and the number of equipments in stopped can be visually distinguished, and, for example, each rectangle information may be displayed in a different color tone or luminance. When there is a failed MC (e. g. MC 148A), an icon 110 indicating a fault is displayed on a display portion of the MC.

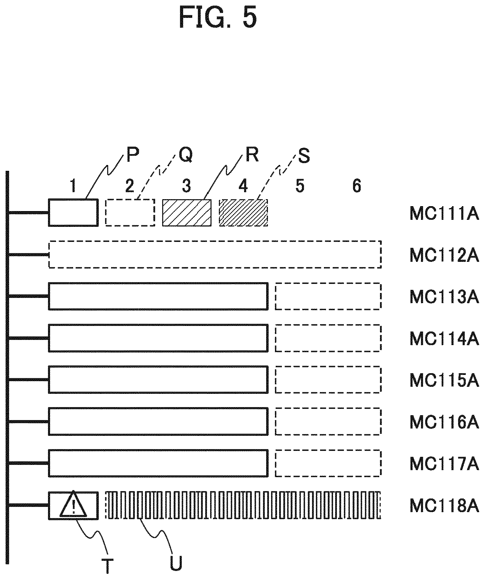

In FIG. 4, as information for each MC of each equipment group, the number of heat source equipments is illustrated by distinguishing between two types of operating and stopped, but as illustrated in FIG. 5, three or more operation states may be illustrated separately. In this case, the rectangular information corresponding to the respective operating states is displayed by distinguishing them by different colors, luminance, patterns, or the like. The size of each rectangle information corresponds to the number of heat source equipments in the corresponding operation state, and the larger the number of heat source equipments, the longer the rectangle information in the lateral direction is displayed. The operation state is illustrated as, for example, whether the it is operating in a set state of "remote" (rectangular information P of the thick line frame of FIG. 5) or stopped in a set state of "remote" (rectangular information Q in the dotted frame of FIG. 5) enabling remote operating/stopped operation from the facility manager 50, is operating in a set state of "hand" (rectangular information R of the solid line frame indicated by the bold hatched line in FIG. 5) or stopped in a set state of "hand" (rectangular information S of the solid line frame indicated by the thin line slant in FIG. 5) enabling operating/stopped operation by a switch in the relevant heat source equipment, is out of order (rectangle information T of the solid line frame with the fault icon of FIG. 5 superimposed thereon), or is not registered in the facility manager 50 (rectangular information U in the dotted frame with the vertical line in FIG. 5).

At this time, since all the heat source equipments connected to the MC operating in the "hand" set state are operated in the "hand" set state, the relevant rectangular information is displayed in a display state indicating the "hand" set state. Since the heat source equipments connected to the MC operating in the "remote" set state operate in the specified set state, the relevant rectangular information is displayed in a display state indicating the specified set state ("hand" set state or "remote" set state).

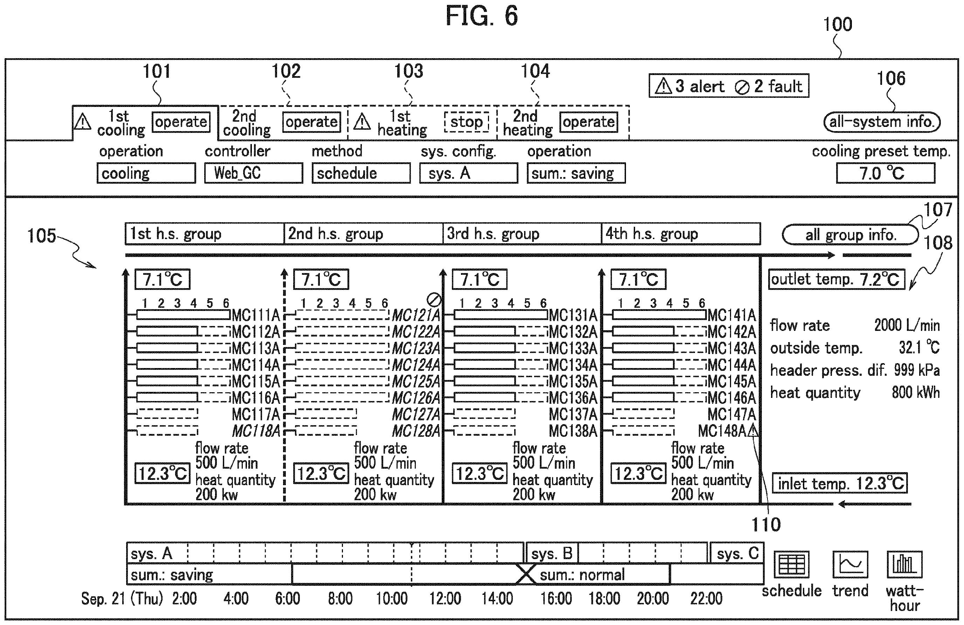

In the case of the operating state, it is displayed in the high luminance display state which is the first display state. When any equipment or the entire equipment group is stopped, the corresponding display is displayed in a low brightness display state as a second display state. For example, when the entire second heat source equipment group 12 is in the stopped state, as illustrated in FIG. 6, the text information indicating the identification information of the corresponding MC, the rectangle information indicating the number of connected heat source equipment in each operating state, and the water distributing pipe portion indicating the inflow direction of water into the second heat source equipment group 12 by arrows are displayed in low brightness.

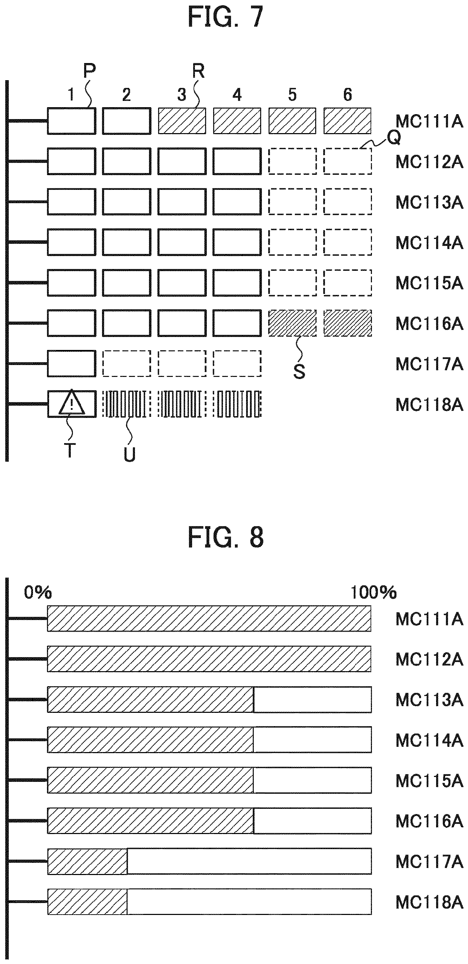

As another display form, as illustrated in FIG. 7, rectangular information of the same size for each heat source equipment may be displayed and arranged in a display state corresponding to the respective operation states.

As the information of each equipment group, as illustrated in FIG. 8, graph information illustrating the ratio of the number of operating heat source equipments among all connected heat source equipments may be displayed for each MC. By displaying the graph information indicating the ratio of the number of heat source equipments in operating, even when the number of heat source equipments connected to the MC is ten or more, the graph information can be displayed with good visibility.

On the management screen 100 thus displayed, when an all-system information button 106 displayed on the upper part of the screen is clicked, a system list screen illustrating the first dedicated cooling system 10, the second dedicated cooling system 20, the first dedicated heating system 30, and the second dedicated heating system 40 is displayed as detailed information of the system constructed in the industrial facility management system 1. In this system list screen, the control states of the respective systems, for example, an operating/stopped state, an ON/OFF state of demand control, and the like are displayed.

On the displayed management screen 100, when an all equipment group information button 107 displayed on the right side of the equipment status display area 105 is clicked, a heat source equipment group list screen illustrating the first heat source equipment group 11, the second heat source equipment group 12, the third heat source equipment group 13, and the fourth heat source equipment group 14 is displayed as detailed information of the equipment group belonging to the first dedicated cooling system 10. In the heat source equipment group list screen, the control states of the respective heat source equipment groups, for example, an operating/stopped state, an ON/OFF state of demand control, and the like are displayed.

When the display portion of the name of one of the equipment groups is clicked on the displayed management screen 100, an MC list screen indicating the MC to which the equipment group belongs is displayed as detailed information of the equipment group. For example, when the display portion of the name of the first heat source equipment group 11 is clicked, an MC list screen illustrating MC 111A to MC 118A is displayed. The control state of each MC, for example, an operating/stopped state, an ON/OFF state of demand control, and the like are displayed in the MC list screen.

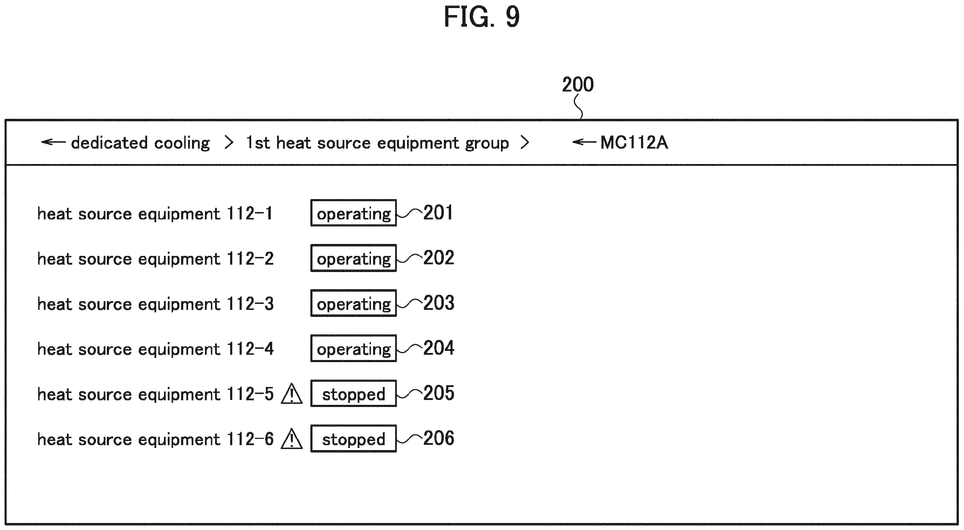

When the display portion of the name of any MC is clicked on the displayed management screen 100, a heat source equipment list screen illustrating the heat source equipment to which the MC belongs is displayed as detailed information of the MC. For example, when the display portion of the name MC 112A is clicked, as illustrated in FIG. 9, a heat source equipment list screen 200 illustrating the heat source equipments 112-1 to 112-6 is displayed. In the heat source equipment list screen 200, operation buttons 201 to 206 for switching the operating/stopped of each of the heat source equipments 112-1 to 112-6 is displayed. Each operation button 201 to 206 displays text information of "operating" or "stopped" indicating the current operation state of the corresponding heat source equipment. When these operation buttons 201 to 206 are clicked, the operating/stopped state of the corresponding heat source equipment is switched and the text information on the operation buttons is changed.

Returning to FIG. 4, in the equipment status display area 105 of the management screen 100, for each heat source equipment group, the average value of the water temperature measured at the inlet of the heat source equipment measured by the inlet temperature sensor 61 of the heat source equipment to which the group belongs, the average value of the water temperature measured at the outlet of the heat source equipment measured by the outlet temperature sensor 62, the flow rate of returned water to the heat source equipment, and the discharged heat quantity are displayed together.

Also, on the management screen 100, a system status display area 108 on the right side of the equipment status display area 105 displays the flow rate of water, the outside air temperature, the differential pressure between headers, and the discharged heat quantity for the entire system currently being displayed.

By displaying the management screen configured in this manner, a management parson can visually and easily recognize on one screen the state of operation of the heat source equipment connected to which MC of which heat source equipment group, while grasping the configuration of the heat source system in the facility.

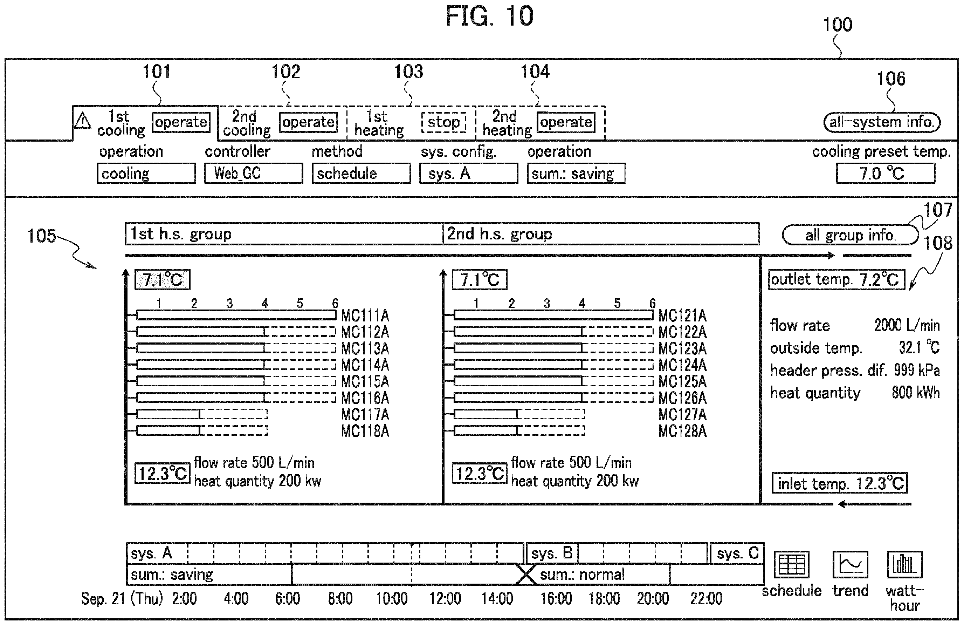

As another form, when an operation for displaying the management screen of a system having two number of heat source equipment groups is performed, as illustrated in FIG. 10, the operation state of the heat source equipment for each MC is displayed for each of the two number of heat source equipment groups, and the configuration of water distributing pipes for flowing water into these two number of heat source equipment groups is displayed.

The MC, which is the above-described repeater, may be a controller in the form of a controller having an independent housing or a controller of a typical heat source equipment.

Further, in the above-described embodiment, a heat source equipment group including a plurality of repeaters to which a plurality of heat source equipments are connected is referred to as a heat source equipment group, but a plurality of heat source equipments connected to a single repeater may be referred to as a heat source equipment group.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A manager configured to display a state of a heat source system comprising a plurality of heat source equipment groups each comprising, as one unit, a plurality of heat source equipments connected to a load device by one same water distributing pipe, configured to capture water subjected to heat exchange treatment by the load device, and generating hot or cold water for supplying to the load device again, and a repeater to which the plurality of heat source equipments are connected, the manager comprising:
an equipment information acquisition unit configured to acquire operation state information of each of the heat source equipments from the repeater of each of the plurality of heat source equipment groups;
a display information generation unit configured to generate display information of a management screen relating to the heat source equipments in the heat source system by arranging information indicating the operation state information of the heat source equipments acquired by the equipment information acquisition unit for each applicable repeater at a corresponding position in a configuration diagram of the water distributing pipe constructed in the heat source system for each of the heat source equipment groups; and
a display unit configured to display the display information generated by the display information generation unit.

2. The manager of claim 1, wherein
the display information generation unit is configured to generate the display information of the management screen by illustrating the operation state information of each of the heat source equipments for each of the repeaters as a graph illustrating a number of heat source equipments in operating and a number of heat source equipments in stopped, or a graph illustrating a ratio of a number of heat source equipments in operating among the heat source equipments connected to a corresponding repeater.

3. The manager of claim 1, wherein
the display information generation unit is configured to generate the display information of the management screen by illustrating the operation state information of each of the heat source equipments for each of the repeaters as graphic information which distinguishes whether or not operating or stopped in a state capable of remotely operating from the manager, whether or not operating or stopped in a state capable of operating in the corresponding heat source equipments, whether or not being out of order, and whether or not registered in the manager.

4. The manager of any one of claims 1 to 3, wherein
the display information generation unit is configured to generate the display information of the management screen including display information for performing an operation for displaying detailed information of each of the heat source equipment groups and display information for performing an operation for displaying detailed information of each repeater in the management screen.

5. The manager of any one of claims 1 to 4, wherein
the display information generation unit is configured to generate the display information so as to display the operation state information of the heat source equipment in order from the heat source equipment group with the highest priority of operation.

6. The manager of any one of claims 1 to 5, wherein
the heat source system comprises:
a outward water temperature sensor for measuring a temperature of outward water supplied to the load device;
a return water temperature sensor for measuring a temperature of return water subjected to heat exchange treatment by the load device; and
a return water flow meter for measuring a flow rate of the return water,
the equipment information acquisition unit is configured to acquire a water temperature measurement value of the outward water measured by the outward water temperature sensor, a water temperature measurement value of the return water measured by the return water temperature sensor, and a flow rate measurement value of the return water measured by the return water flow meter, and
the display information generation unit is configured to generate the display information of the management screen including the water temperature measurement value of the outward water, the water temperature measurement value of the return water, and the flow rate measurement value of the return water acquired by the equipment information acquisition unit.

7. The manager of any one of claims 1 to 6, wherein
each of the heat source equipments comprises:
an inlet temperature sensor for measuring the temperature of a taken water;
an outlet temperature sensor for measuring the temperature of a discharged water; and
a flow regulator for regulating the flow rate of taken water,
the equipment information acquisition unit is configured to acquire, via the repeater, a water temperature measurement value measured by the inlet temperature sensor, a water temperature measurement value measured by the outlet temperature sensor, and a flow rate of the taken water, which is regulated by the flow regulator, and
the display information generation unit is configured to generate, based on the information acquired by the equipment information acquiring unit, the display information on the management screen including at least one of an average value of water temperature measured by the inlet temperature sensor, an average value of water temperature measured by the outlet temperature sensor, and an average value or a total value of the flow rate of the taken water, in relation to the heat source equipment for each of the heat source equipment groups.

8. The manager of any one of claims 1 to 7, wherein
the manager is connected to a plurality of heat source systems constructed for each objected load device,
the display information generation unit is configured to generate tab information for specifying one of the plurality of systems, and
the display unit is configured to display the display information of the management screen relating to the heat source system of the systems designated by the tab information.

9. A management system configured to manage a state of a heat source system comprising: a plurality of heat source equipments connected to a load device by one same water distributing pipe, configured to capture water subjected to heat exchange treatment by the load device, and configured to generate hot or cold water for supplying to the load device again; a repeater to which the plurality of heat source equipments are connected; and a manager configured to display a state of a heat source equipment group comprising the plurality of heat source equipments and the repeater as one unit, the management system comprising:
an equipment information acquisition unit configured to acquire operation state information of each of the heat source equipments from the repeater of each of the plurality of heat source equipment groups;
a display information generation unit configured to generate display information of a management screen relating to the heat source equipments in the heat source system by arranging information indicating the operation state information of the heat source equipments acquired by the equipment information acquisition unit for each applicable repeater at a corresponding position in a configuration diagram of the water distributing pipe constructed in the heat source system for each of the heat source equipment groups; and
a display unit configured to display the display information generated by the display information generation unit.

10. A display method of heat source system management information by a manager configured to display a state of a heat source system comprising a plurality of heat source equipment groups each comprising, as one unit, a plurality of heat source equipments connected to a load device by one same water distributing pipe, configured to capture water subjected to heat exchange treatment by the load device, and generating hot or cold water for supplying to the load device again, and a repeater to which the plurality of heat source equipments are connected, the display method comprising:
acquiring operation state information of each of the heat source equipments from the repeater of each of the plurality of heat source equipment groups;
generating display information of a management screen relating to the heat source equipments in the heat source system by arranging information indicating the operation state information of the heat source equipments for each applicable repeater at a corresponding position in a configuration diagram of the water distributing pipe constructed in the heat source system for each of the heat source equipment groups; and
displaying the generated display information.
